# EUROPEAN PATENT APPLICATION

(11) **EP 4 362 291 A1**
(43) Date of publication of application: **01.05.2024**
(21) Application number: 22828008.7
(22) Date of filing: 24.03.2022
(51) Int. Cl.: H02K 5/20, H02K 7/116

(54) **MOTOR UNIT**

(30) Priority: 21.06.2021 JP 2021102790
(71) Applicant: Yamaha Hatsudoki Kabushiki Kaisha, Iwata-shi, Shizuoka 438-8501 (JP)
(72) Inventor: KAMICHIKA, Takuro, Iwata-shi, Shizuoka 438-8501 (JP); KUROSAWA, Shinichi, Iwata-shi, Shizuoka 438-8501 (JP); TANINO, Shogo, Iwata-shi, Shizuoka 438-8501 (JP)
(74) Representative: Stöckeler, Ferdinand
(86) International application number: PCT/JP2022/014120
(87) International publication number: WO 2022/270089

(57) **Abstract**

A motor unit 10 includes a motor 12 and a speed reducer 14. The motor 12 includes a case 18 having a stator housing 20, a first motor cover 22 and a second motor cover 24. Inside the case 18, a rotor 40 which has a rotor shaft 46, and a stator 60 which has a stator core 62 and a stator coil 64 are provided. An oil filter 100 is provided on an outer surface of the first motor cover 22. When viewed axially along the rotor shaft 46, at least part of a lower half of the oil filter 100 overlaps with an upper half of the stator core 62. The speed reducer 14 has an oil reservoir 126, and is provided on a side of the first motor cover 22. Oil pumps 130 are provided in an outer surface of the speed reducer 14.

## Description

### TECHNICAL FIELD

The present invention relates to motor units, and more specifically, to a motor unit used in an electric vehicle.

### BACKGROUND ART

As an example which is pertinent to conventional techniques of this kind, Patent Literature 1 discloses a rotating electrical machine. The rotating electrical machine includes a cooling medium path in which a cooling medium for cooling a stator flows, and a cooling medium filter provided in the path of the cooling medium to remove contamination from the cooling medium. The cooling medium filter is installed on a top side of a case which houses the stator.

### CITATION LIST

### PATENT LITERATURE

Patent Literature 1: JP-A 2019-154115

### SUMMARY OF INVENTION

### TECHNICAL PROBLEM

Patent Literature 1 does not show sufficient consideration to compactly configuring the rotating electrical machine.

Therefore, a primary object of the present invention is to provide a motor unit which can be configured compactly.

### SOLUTION TO PROBLEM

According to an aspect of the present invention, there is provided a motor unit which includes a case having a stator housing, a first motor cover provided at an output side end portion of the stator housing, and a second motor cover provided at a non-output side end portion of the stator housing; a rotor provided inside the case and having a rotor shaft; a stator provided inside the case and having a stator core provided radially outside the rotor and a stator coil provided in the stator core; and an oil filter provided on an outer surface of the first motor cover for filtration of oil to be supplied into the case; wherein at least part of a lower half of the oil filter overlaps with an upper half of the stator core when viewed axially along the rotor shaft.

In the present invention, the oil filter is provided on the outer surface of the first motor cover so that at least part of the lower half of the oil filter overlaps with the upper half of the stator core when viewed axially along the rotor shaft. This makes it possible to provide the oil filter on the first motor cover, at a higher position than the center, i.e., above the center, of the stator core, by utilizing an empty space that does not interfere with other members. Therefore, it is possible to configure the motor unit compactly.

Preferably, the motor unit further includes a speed reducer provided on a side of the first motor cover in order to slow down rotation of the rotor and including an oil reservoir storing oil from the case, and an oil pump provided on an outer surface of the speed reducer in order to discharge oil out of the oil reservoir. In this case, since the oil pump for discharging oil out of the oil reservoir of the speed reducer is provided on the outer surface of the speed reducer, it is possible to configure the motor unit compactly, including the oil pump.

Further, preferably, the speed reducer further includes an output shaft provided in parallel with the rotor shaft; and with a line segment connecting a center of the rotor shaft and a center of the output shaft being called a reference line, a perpendicular line perpendicular to the reference line and passing the center of the rotor shaft being called a first perpendicular line, and a perpendicular line perpendicular to the reference line and passing the center of the output shaft being called a second perpendicular line; when viewed axially along the rotor shaft, at least part of the oil filter overlaps with a region surrounded by the reference line, the first perpendicular line and the second perpendicular line. In this case, the region surrounded by the reference line, the first perpendicular line and the second perpendicular line when viewed axially along the rotor shaft is often left as an empty space. Therefore, by providing the oil filter in such a way that at least part of the oil filter overlaps with the region, it becomes possible to make an effective use of the empty space without interfering with other members, and to configure the motor unit compactly.

Further, preferably, the oil filter is at a higher position than the output shaft. In this case, it is possible to configure the motor unit compactly without interfering with output from the output shaft of the speed reducer.

Preferably, the oil filter is at a higher position than the rotor shaft. In this case, it is possible to configure the motor unit compactly without interfering with output from the rotor shaft of the rotor.

Further, preferably, a center of the oil filter is at a higher position than an outer circumferential surface of the stator coil. In this case, it is possible to drop oil easily onto the stator coil inside the case via the oil filter.

Further, preferably, the motor unit further includes an externally attached pipe provided outside the stator housing, having an outward oil path for supplying oil which has passed the oil filter into the case, and held by the first motor cover and the second motor cover. In this arrangement, at least part of the oil filter overlaps with the externally attached pipe when viewed axially along the rotor shaft. In this case, the region outside the stator housing where the externally attached pipe is provided, and a region adjacent thereto are often left as empty spaces. Therefore, by providing the oil filter in such a way that at least part of the oil filter overlaps with the externally attached pipe when viewed axially along the rotor shaft, it becomes possible to make an effective use of the empty space without interfering with other member, and to configure the motor unit compactly.

Preferably, the oil filter has an oil discharge port at an end portion facing the first motor cover, and the first motor cover has an oil path for communication between the oil discharge port and the outward oil path of the externally attached pipe. In this case, it is possible to supply oil smoothly to the outward oil path of the externally attached pipe from the oil discharge port provided at the end portion of the oil filter which faces the first motor cover, via the oil path of the first motor cover.

It should be noted here that in the present invention, "output side end portion of the stator housing" refers to an axial end portion of the stator housing from which the motor output is taken off.

"Non-output side end portion of the stator housing" refers to an axial end portion of the stator housing from which the motor output is not taken off (an axial end portion on a side away from the output side end portion).

### ADVANTAGEOUS EFFECTS OF INVENTION

According to the present invention, there is obtained a motor unit which can be configured compactly.

### BRIEF DESCRIPTION OF DRAWINGS

Fig. 1 is a front perspective view which shows a motor unit according to an embodiment of the present invention.
Fig. 2 is a rear perspective view which shows the motor unit in Fig. 1.
Fig. 3 is a right side view which shows the motor unit in Fig. 1.
Fig. 4 is a left side view which shows the motor unit in Fig. 1.
Fig. 5 is an illustrative sectional view which shows the motor unit in Fig. 1.
Fig. 6 is a plan view which shows a gasket.
Fig. 7 is a schematic illustration which shows oil paths.

### DESCRIPTION OF EMBODIMENTS

Hereinafter, embodiments of the present invention will be described with reference to the drawings.

A motor unit 10 according to an embodiment of the present invention is suitably applied to an electric vehicle. The terms front and rear, left and right, and up and down used in the embodiments of the present invention are defined based on a direction in which a rotor 40 (which will be described later) extends as the left-right direction, and a direction from a motor 12 (which will be described later) toward an inverter 16 (which will be described later) as the rearward direction. In the drawings, "Fr" indicates forward, "Rr" indicates rearward, "R" indicates rightward, "L" indicates leftward, "U" indicates upward and "Lo" indicates downward.

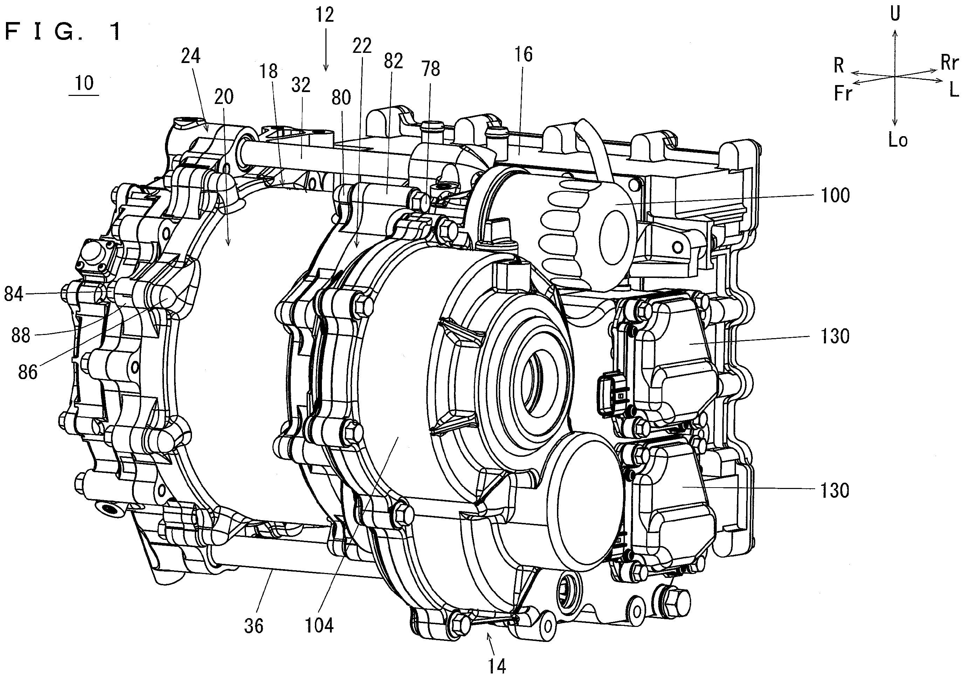

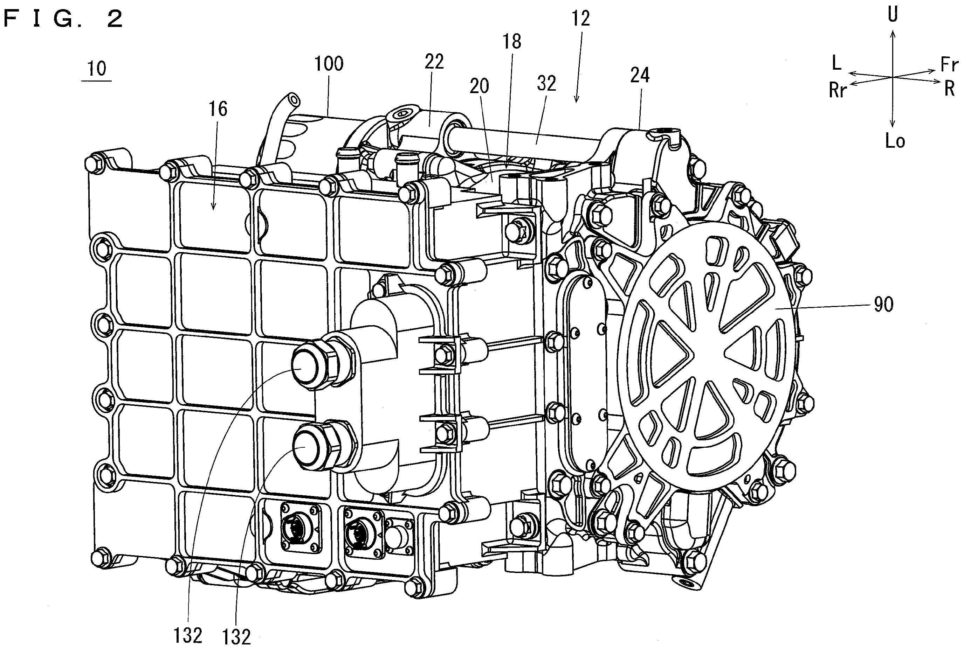

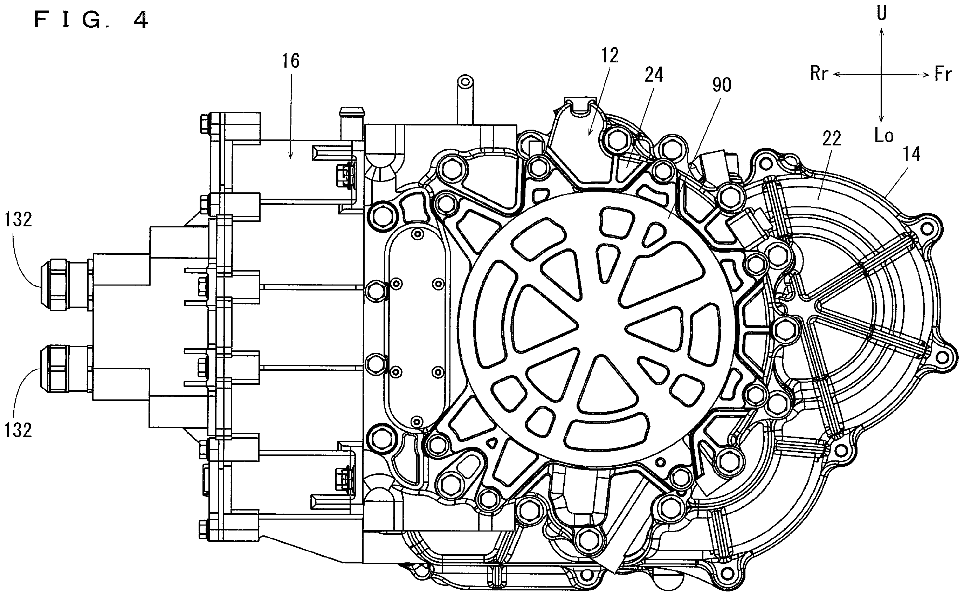

Referring to Fig. 1 through Fig. 4, the motor unit 10 is a mechatronic integrated unit including the motor 12, a speed reducer 14, and an inverter 16. The speed reducer 14 is provided on a side (left side in the present embodiment) of the motor 12, while the inverter 16 is provided behind the motor 12 and the speed reducer 14.

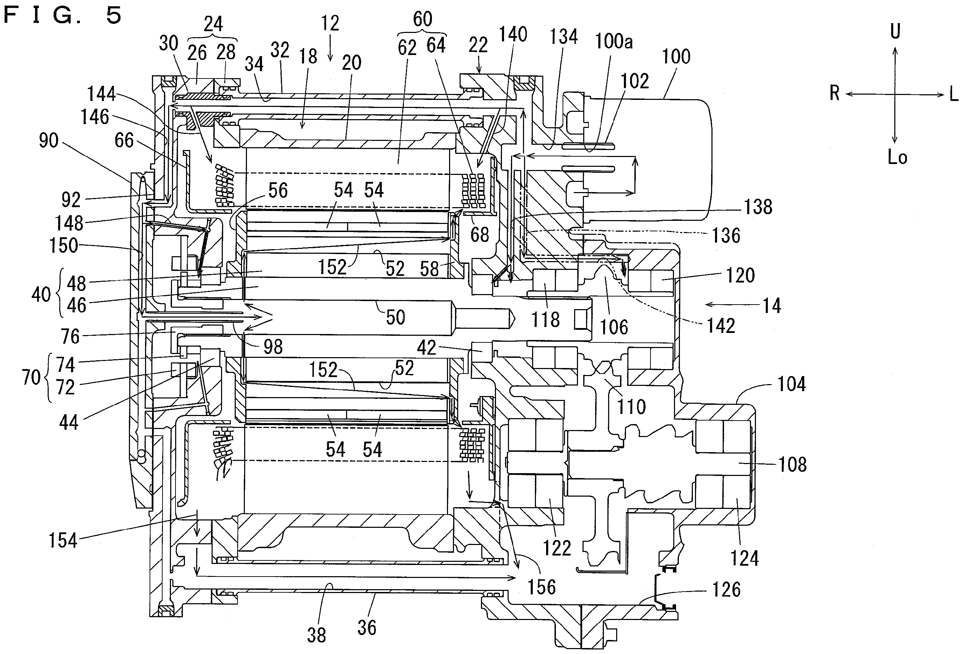

Referring also to Fig. 5, the motor 12 includes a case 18. The case 18 has a three-tier structure, and includes a stator housing 20, a first motor cover 22 provided at an output side end portion of the stator housing 20, and a second motor cover 24 provided at a non-output side end portion of the stator housing 20. The second motor cover 24 includes a cover main body 26, and a pipe holder 28 attached to the cover main body 26. A branching piece 30 is provided between the cover main body 26 and the pipe holder 28.

Outside the stator housing 20, there is provided a first externally attached pipe 32 held by the first motor cover 22 and the second motor cover 24. The first externally attached pipe 32 is a separate member from the stator housing 20, provided slightly spaced away from the stator housing 20, and sandwiched by the first motor cover 22 and the second motor cover 24. The first externally attached pipe 32 has an outlet side end portion that is held by the pipe holder 28 and is connected with the branching piece 30. Inside the first externally attached pipe 32, there is formed an outward oil path 34 which provides communication between the first motor cover 22 and the second motor cover 24. Also, outside the stator housing 20 at a position lower than the first externally attached pipe 32, there is provided a second externally attached pipe 36 held by the first motor cover 22 and the second motor cover 24. The second externally attached pipe 36 is a separate member from the stator housing 20, provided slightly spaced away from the stator housing 20, and sandwiched by the first motor cover 22 and the second motor cover 24. The second externally attached pipe 36 has an inlet side end portion that is held by the pipe holder 28. Inside the second externally attached pipe 36, there is formed a return oil path 38 which provides communication between the first motor cover 22 and the second motor cover 24. The return oil path 38 is provided at a lower position than the outward oil path 34. Preferably, the outward oil path 34 has a smaller sectional area than the return oil path 38. In other words, preferably, an inner diameter of the first externally attached pipe 32 is smaller than that of the second externally attached pipe 36.

The rotor 40 is provided inside the case 18. The rotor 40 is held rotatably by the first motor cover 22 and the second motor cover 24 via motor bearings 42, 44. The rotor 40 includes a rotor shaft 46 and a rotor core 48. The rotor shaft 46 has an axially extending hollow portion 50. The rotor core 48 has a plurality of rotor core holes 52 and a plurality of magnets 54. End plates 56, 58 are disposed at two axial end portions of the rotor core 48.

Inside the case 18, a stator 60 is provided radially outside the rotor 40. The stator 60 includes a stator core 62 which is provided radially outside the rotor 40 and is fixed to the stator housing 20, and a stator coil 64 which is wound around the stator core 62. The stator core 62 is fixed to the stator housing 20 by means of shrink fit. Coil end covers 66, 68 are provided to cover two axial end portions of the stator coil 64, i.e., to cover coil ends.

Between the second motor cover 24 and the rotor shaft 46, there is provided a resolver 70 for detection of a rotating angle of the rotor shaft 46. The resolver 70 includes a resolver stator 72 which is attached to the second motor cover 24, and a resolver rotor 74 which is attached to the rotor shaft 46. The resolver rotor 74 is fixed to a rear end portion of the rotor shaft 46 with a bolt 76 which has a generally hat-like section.

Referring to Fig. 1, the stator housing 20 and the first motor cover 22 are connected to each other by a plurality of bolts 78. Each bolt 78 is threaded into a boss 80 which is provided on an output side end portion in an outer circumferential surface of the stator housing 20 and a boss 82 which is provided on an outer circumferential portion of the first motor cover 22. The stator housing 20 and the second motor cover 24 are connected to each other by a plurality of bolts 84. Each bolt 84 is threaded into a boss 86 which is provided on a non-output side end portion in an outer circumferential surface of the stator housing 20 and a boss 88 which is provided on an outer circumferential portion of the second motor cover 24.

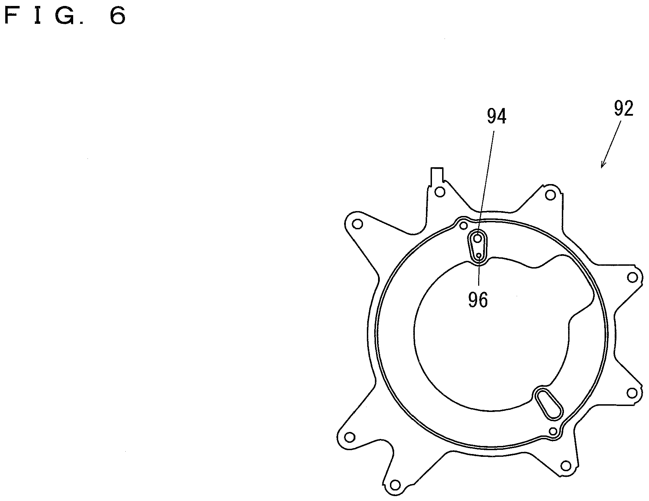

Referring to Fig. 5, a cover 90 is provided on a side of the second motor cover 24. A gasket 92 is placed between the second motor cover 24 and the cover 90. Referring to Fig. 6, the gasket 92 is formed in a generally annular shape, and has through-holes 94, 96 for communication between oil paths. A pipe 98 extending into the hollow portion 50 of the rotor shaft 46 is attached at a center portion of the cover 90.

In an outer surface of the first motor cover 22, an oil filter 100 is provided for filtration of oil which is to be supplied into the case 18. The oil filter 100 is supplied with oil from an oil cooler 158 (which will be described later) provided outside the motor unit 10. The oil filter 100 has a generally cylindrical outer shape, having an oil discharge port 100a at a center of an end portion facing the first motor cover 22. The oil filter 100 and the first motor cover 22 are connected with each other by a union bolt 102. The union bolt 102 is attached to an inlet-side end portion of an oil path 134 (which will be described later) of the first motor cover 22, and is inserted into the oil discharge port 100a of the oil filter 100.

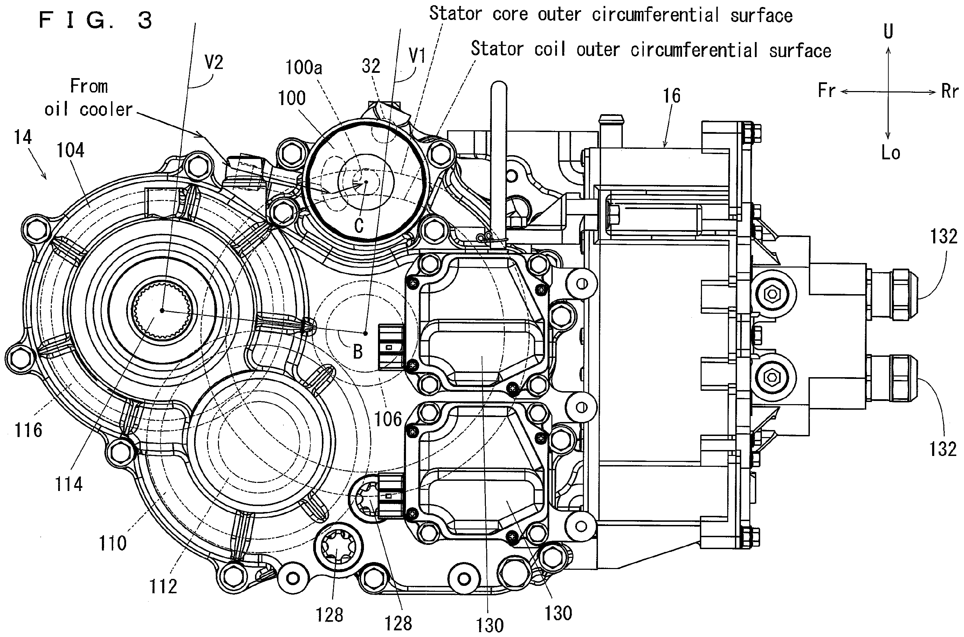

Referring also to Fig. 3, when viewed axially of the rotor shaft 46, at least part of a lower half of the oil filter 100 overlaps with an upper half of the stator core 62. The oil filter 100 is at a higher position than the rotor shaft 46 and an output shaft 114 (which will be described later). A center C of the oil filter 100 is at a higher position than an outer circumferential surface of the stator coil 64. When viewed axially along the rotor shaft 46, at least part of the oil filter 100 overlaps with the first externally attached pipe 32. Preferably, if the oil filter 100 is provided by a cylindrical filter, the oil discharge port 100a is at the center of the oil filter 100, and the center of the oil filter 100 is at a position higher than the output shaft 114 and higher than the rotor shaft 46. In this case, the layout of the oil filter 100 is compact, and it is possible to design the oil path appropriately.

The speed reducer 14 is provided on a side (left side in the present embodiment) of the first motor cover 22 in order to slow down rotation of the rotor. The speed reducer 14 includes a gear cover 104 provided on a side of the first motor cover 22. Referring to Fig. 3 and Fig. 5, the gear cover 104 is provided therein with an input gear 106, an intermediate shaft 108, intermediate gears 110, 112, an output shaft 114, and an output gear 116. The intermediate shaft 108 and the output shaft 114 are in parallel to the rotor shaft 46. The input gear 106 is attached to a tip portion of the rotor shaft 46, and is supported rotatably by the first motor cover 22 and the gear cover 104 via input gear bearings 118, 120. The intermediate shaft 108 is supported rotatably by the first motor cover 22 and the gear cover 104 via intermediate gear bearings 122, 124. The intermediate gears 110, 112 are both attached to the intermediate shaft 108. The intermediate gear 110 meshes with the input gear 106. The intermediate gear 112 meshes with the output gear 116. The output shaft 114 is supported rotatably by the first motor cover 22 and the gear cover 104 via unillustrated bearings. The output gear 116 is attached to the output shaft 114. With a line segment connecting a center of the rotor shaft 46 and a center of the output shaft 114 being called a reference line B; a perpendicular line perpendicular to the reference line B and passing the center of the rotor shaft 46 being called a first perpendicular line V1; and a perpendicular line perpendicular to reference line B and passing the center of the output shaft 114 being called a second perpendicular line V2; when viewed axially along the rotor shaft 46, at least part of the oil filter 100 overlaps with a region surrounded by the Reference line B, the first perpendicular line V1 and the second perpendicular line V2. The gear cover 104 covers an outer surface of the first motor cover 22, whereby an oil reservoir 126 which communicates with the return oil path 38 is formed. In other words, the oil reservoir 126 is formed inside the speed reducer 14. The oil reservoir 126 is provided with an oil strainer 126a, and stores oil from the case 18 and oil from the gear cover 104.

The gear cover 104 is provided with two oil level gauges 128 for detecting an amount of oil inside the oil reservoir 126. Also, the gear cover 104 is provided with two oil pumps 130 for supplying oil from inside the oil reservoir 126 to the external oil cooler 158. In other words, the two oil pumps 130 are provided on an outer surface of the speed reducer 14 in order to discharge oil to an outside.

The inverter 16 is connected with a battery (not illustrated) via connecting terminals 132, converts a direct current from the battery into an alternating current, and supplies the current to the motor 12.

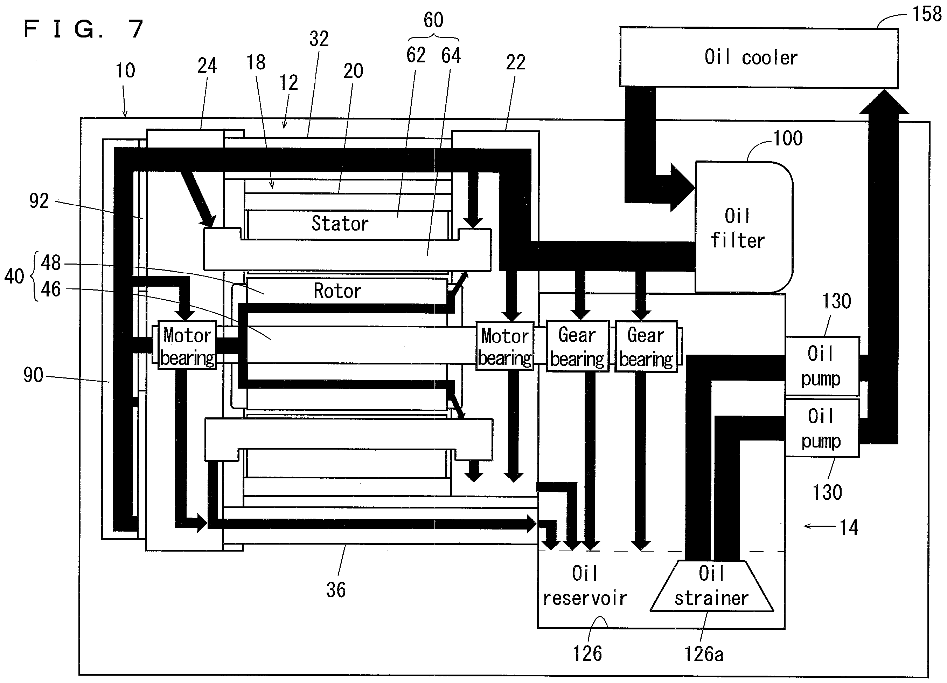

The motor unit 10 described thus far is formed with oil paths as follows:
Referring to Fig. 5 and Fig. 7, the first motor cover 22 has an oil path 134 communicating with the outward oil path 34 to supply oil from the oil filter 100 to the outward oil path 34, and oil paths 136, 138, 140 branching from the oil path 134. The oil path 134 provides communication between the oil discharge port 100a of the oil filter 100 and the outward oil path 34 of the first externally attached pipe 32. The oil path 136 communicates with an oil path 142 inside the speed reducer 14, to supply oil to the input gear bearing 120. Oil from the oil path 138 is supplied to the motor bearing 42 and the input gear bearing 118. Oil from the oil path 140 is supplied to the coil end of the stator coil 64. As described, oil is supplied into the case 18 via the oil paths 138, 140. Oil from the oil path 134 flows through the outward oil path 34 and is supplied to the second motor cover 24.

The second motor cover 24 has oil paths 144, 146, 148. Oil which flows through the outward oil path 34 and is supplied to the second motor cover 24 is divided by the branching piece 30, supplied to the coil end of the stator coil 64 via the oil path 144, and sent toward the cover 90 via the oil path 146. The cover 90 has an oil path 150. The oil path 150 is capable of communicating the oil paths 146 and 148 with each other. In other words, the oil path 146 and the oil path 150 communicate with each other via the through-hole 94 of the gasket 92, while the oil path 150 and the oil path 148 communicate with each other via the through-hole 96 of the gasket 92. Therefore, the oil paths 146 and 148 of the second motor cover 24 communicate with each other via the oil path 150 of the cover 90, and oil from the oil path 146 is supplied to the motor bearing 44 and its surroundings via the oil paths 150, 148. Also, the oil path 150 communicates, via the pipe 98, the hollow portion 50 of the rotor shaft 46 and the rotor core holes 52, with an oil path 152 which leads to the coil end of the stator coil 64. Therefore, oil from the oil path 150 is supplied to the coil end of the stator coil 64 via the oil path 152. As described, oil from the outward oil path 34 is supplied into the case 18 via the second motor cover 24 and the cover 90.

Oil which is supplied to the coil end of the stator coil 64 is then supplied to the oil reservoir 126 via an oil path 154 and the return oil path 38, or via an oil path 156 of the first motor cover 22. Oil inside the oil reservoir 126 is sucked by the two oil pumps 130 through the oil strainer 126a, and supplied to the oil cooler 158. The oil cooler 158 cools the oil, and then the oil is returned to the oil filter 100.

In the present embodiment, the first externally attached 32 represents the externally attached pipe.

According to the motor unit 10 as described thus far, the oil filter 100 is provided on the outer surface of the first motor cover 22 so that at least part of the lower half of the oil filter 100 overlaps with the upper half of the stator core 62 when viewed axially along the rotor shaft 46. This makes it possible to provide the oil filter 100 on the first motor cover 22, at a higher position than the center, i.e., above the center, of the stator core 62, by utilizing an empty space that does not interfere with other members. Therefore, it is possible to configure the motor unit 10 compactly.

The oil pumps 130 for discharging oil out of the oil reservoir 126 of the speed reducer 14 is provided on the outer surface of the speed reducer 14. Therefore, it is possible to configure the motor unit 10 compactly, including the oil pumps 130.

The region surrounded by the reference line B, the first perpendicular line V1 and the second perpendicular line V2 when viewed axially along the rotor shaft 46 is often left as an empty space. Therefore, by providing the oil filter 100 in such a way that at least part of the oil filter 100 overlaps with the region, it becomes possible to make an effective use of the empty space without interfering with other members, and to configure the motor unit 10 compactly.

Since the oil filter 100 is at a higher position than the output shaft 114, it is possible to configure the motor unit 10 compactly without interfering with output from the output shaft 114 of the speed reducer 14.

Since the oil filter 100 is at a higher position than the rotor shaft 46, it is possible to configure the motor unit 10 compactly without interfering with output from the rotor shaft 46 of the rotor 40.

Since the center C of the oil filter 100 is at a higher position than the outer circumferential surface of the stator coil 64, it is possible to drop oil easily onto the stator coil 62 inside the case 18 via the oil filter 100.

The region outside the stator housing 20 where the first externally attached pipe 32 is provided, and a region adjacent thereto are often left as empty spaces. Therefore, by providing the oil filter 100 in such a way that at least part of the oil filter 100 overlaps with the first externally attached pipe 32 when viewed axially along the rotor shaft 46, it becomes possible to make an effective use of the empty space without interfering with other member, and to configure the motor unit 10 compactly.

It is possible to supply oil smoothly to the outward oil path 34 of the first externally attached pipe 32 from the oil discharge port 100a provided at the end portion of the oil filter 100 which faces the first motor cover 22, via the oil path 134 of the first motor cover 22.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

10 Motor unit
12 Motor
14 Speed reducer
16 Inverter
18 Case
20 Stator housing
22 First motor cover
24 Second motor cover
32 First externally attached pipe
34 Outward oil path
36 Second externally attached pipe
38 Return oil path
40 Rotor
46 Rotor shaft
48 Rotor core
60 Stator
62 Stator core
64 Stator coil
90 Cover
92 Gasket
100 Oil filter
100a Oil discharge port
108 Intermediate shaft
114 Output shaft
126 Oil reservoir
130 Oil pump
134, 136, 138, 140, 142, 144, 146, 148, 150, 152, 154, 156 Oil paths
B Reference line
C Center of oil filter
V1 First perpendicular line
V2 Second perpendicular line

## Claims

1. A motor unit comprising:
a case including a stator housing, a first motor cover provided at an output side end portion of the stator housing, and a second motor cover provided at a non-output side end portion of the stator housing;
a rotor provided inside the case and having a rotor shaft;
a stator provided inside the case and having a stator core provided radially outside the rotor and a stator coil provided in the stator core; and
an oil filter provided on an outer surface of the first motor cover for filtration of oil to be supplied into the case; wherein
at least part of a lower half of the oil filter overlaps with an upper half of the stator core when viewed axially along the rotor shaft.

2. The motor unit according to Claim 1, further comprising a speed reducer provided on a side of the first motor cover in order to slow down rotation of the rotor and including an oil reservoir storing oil from the case, and
an oil pump provided on an outer surface of the speed reducer in order to discharge oil out of the oil reservoir.

3. The motor unit according to Claim 2, wherein
the speed reducer further includes an output shaft provided in parallel with the rotor shaft; and
with a line segment connecting a center of the rotor shaft and a center of the output shaft being called a reference line, a perpendicular line perpendicular to the reference line and passing the center of the rotor shaft being called a first perpendicular line, and a perpendicular line perpendicular to the reference line and passing the center of the output shaft being called a second perpendicular line;
at least part of the oil filter overlaps with a region surrounded by the reference line, the first perpendicular line and the second perpendicular line when viewed axially along the rotor shaft.

4. The motor unit according to Claim 3, wherein the oil filter is at a higher position than the output shaft.

5. The motor unit according to one of Claims 1 through 4, wherein the oil filter is at a higher position than the rotor shaft.

6. The motor unit according to one of Claims 1 through 5, wherein a center of the oil filter is at a higher position than an outer circumferential surface of the stator coil.

7. The motor unit according to one of Claims 1 through 6, further comprising an externally attached pipe provided outside the stator housing, having an outward oil path for supplying oil which has passed the oil filter into the case, and held by the first motor cover and the second motor cover; wherein
at least part of the oil filter overlaps with the externally attached pipe when viewed axially along the rotor shaft.

8. The motor unit according to Claim 7, wherein
the oil filter has an oil discharge port at an end portion facing the first motor cover, and
the first motor cover has an oil path for communication between the oil discharge port and the outward oil path of the externally attached pipe.
